# EUROPEAN PATENT APPLICATION

(11) **EP 4 703 066 A2**
(43) Date of publication of application: **04.03.2026**
(21) Application number: 25199093.3
(22) Date of filing: 29.08.2025
(51) Int. Cl.: B22F 3/18, B22F 5/00, B22F 5/04, B22F 10/28, B22F 10/50, B22F 10/85, B22F 12/13, B22F 12/90, B23P 6/00, B33Y 10/00, B33Y 30/00, B33Y 40/00, B33Y 50/02, F01D 5/00

(54) **APPARATUS AND RELATED METHOD(S) FOR REPAIRING MACHINE PARTS**

(30) Priority: 30.08.2024 US 202418821214
(71) Applicant: RTX Corporation, Farmington, CT 06032 (US)
(72) Inventor: EL-WARDANY, Tahany, Vernon, 06066 (US); WANG, Zhigang, South Windsor, 06074 (US); POTTER, David N., East Hampton, 06424 (US); ASARE, Ted A., Glastonbury, 06033 (US); CHONG, Joseph, Springfield, 65807 (US); SAWYERS-ABBOTT, Nigel D., South Glastonbury, 06073 (US); BABIEC, Henry, Farmington, 06032 (US); KERNOZICKY, Garrett, Mansfield, 06268 (US)
(74) Representative: Dehns

(57) **Abstract**

A hybrid method for inspecting and repairing a gas turbine engine component, comprising: coupling at least one gas turbine engine component to an inspection system housed within an enclosure area; scanning, via the inspection system, the gas turbine engine component with a first scanner; probing, via the inspection system, the gas turbine engine component with a contact probe; scanning, via the inspection system, areas of interest of the gas turbine engine component with a second scanner; depositing layers of powder onto the areas of interest of the gas turbine engine component; solidifying and fusing each layer with a first directed energy beam to define the gas turbine engine component; pre-heat treating the solidified layer prior to depositing a subsequent layer of powder; and cold working a surface of a solidified layer prior to depositing a subsequent layer of powder.

## Description

The subject matter disclosed herein relates to apparatus and related method(s) for repairing parts and, in particular, to an apparatus and related method(s) for repairing machine parts.

### BACKGROUND OF THE INVENTION

Repairing Ti6Al4V Integrated Blade Rotors (IBRs) involves addressing damage or wear in the IBR. The choice of repair methods depends on the extent of damage, material properties, and requirements and standards for the repaired IBRs. Methods used for repairing Ti6Al4V IBR include electron beam, laser welding, ultrasonic welding, electron beam additive manufacturing (EBAM), cold spray repair, machining, grinding and/or heat treatment.

Ti-6Al-4V is an α + β-alloy, which typically possesses a lamellar microstructure in the as-cast state and, after thermo-mechanical processing and/or post heat treatment, a duplex microstructure with a globularised α phase is obtained. The cooling rate of the Lamellar-Directed Energy Deposition ("LDED") melt pool is as high as 8000 K/s. In addition, highly localized thermal gradients and very short interaction times lead to rapid volume changes and existence of substantial residual stresses, depending on the printing geometries and processing parameters used for LDED-processed Ti-6Al-4V alloy. Using high laser energy density DED process has achieved a lamellar α + β-dominated microstructure with a yield strength (YS) of 951 MPa and an elongation-to-fracture (ETF) of 8.2 %.

In addition to the high laser energy density DED process, other additive manufacturing (AM) techniques also have been used to produce Ti6Al4V aerospace components. However, one of the biggest challenges remains the strong anisotropy in the mechanical properties of the final products. The resultant strong anisotropy does not meet the mechanical property requirements of aerospace material specifications (AMS) standards. This result is mainly due to the formation of large columnar β-phase grains along the build direction. The large columnar β-phase grains exhibit strong orientation textures and, thus, lead to the anisotropic mechanical properties along different directions of the built parts. This phenomenon is particularly severe in products made by DED.

Interstitial elements, e.g., oxygen, nitrogen and carbon, are important impurity interstitial alloying elements that affect the microstructure and mechanical properties of titanium and titanium alloys. The addition of small amounts of oxygen and nitrogen to titanium alloys has been shown to increase its strength significantly; however, undesirable embrittlement is typically associated with titanium alloys with high interstitial element concentrations. Ductility, in turn, normally decreases with increasing oxygen equivalent for Ti-6Al-4V alloy, for a given microstructure and texture, with oxygen itself being most critical.

With respect to the microstructure, oxygen affects the β-transus temperature and promotes the precipitation of α phase from β, including the brittle grain boundary α phase. The grain boundary α phase can weaken the grain boundaries and lead to premature fracture along preferential directions to reduce the ductility. Oxygen induces the martensitic transformation, and the martensitic transformation temperature increases with oxygen. These martensite's have relatively higher strength but lower ductility. Oxygen promotes the precipitation of phase (Ti3Al) as an α stabilizer, which is highly detrimental to the ductility of titanium alloys, and the Ti-6Al-4V alloy is of a borderline composition for phase formation.

### SUMMARY OF THE INVENTION

According to an aspect of the present disclosure, there is provided a hybrid method for inspecting and repairing a gas turbine engine component, comprising: coupling at least one gas turbine engine component to an inspection system housed within an enclosure area; scanning, via the inspection system, the gas turbine engine component with a first scanner; probing, via the inspection system, the gas turbine engine component with a contact probe; scanning, via the inspection system, areas of interest of the gas turbine engine component with a second scanner; depositing layers of powder onto the areas of interest of the gas turbine engine component; solidifying and fusing each layer with a first directed energy beam to define the gas turbine engine component; pre-heat treating the solidified layer prior to depositing a subsequent layer of powder; and cold working a surface of a solidified layer prior to depositing a subsequent layer of powder.

In yet another aspect, the present disclosure is directed to a hybrid inspection and repair system for a gas turbine engine component, comprising: an enclosure area housing a workspace; the enclosure area comprising: a transparent enclosure material; at least one gas inlet; a gas outlet; a sensor for monitoring an oxygen concentration within the enclosure area; an oxygen concentration display; at least one tube disposed in connection with and between at least one gas inlet and a gas source, and disposed in connection with a gas outlet; and the workspace comprising: at least one support plate; a motor operably coupled to a shaft, the shaft rotatably coupled to the at least one support plate, the shaft configured to be coupled to the gas turbine engine component; a contact probe; at least one machine spindle comprising a holder, the machine spindle disposed in electric communication with the motor, the holder secures at least the contact probe; a first scanner configured to couple to the at least one machine spindle; a sensor for determining an amount of oxygen within the enclosure; a material depositor for depositing powder within the workspace; a first energy source for solidifying a deposited layer of powder within the workspace; and a second energy source for pre-heat treating a solidified layer of powder in-situ; and a controller in electronic communication with the first sensor, the first scanner, and the motor, the controller configured to: command the first scanner to scan the gas turbine engine component; command the holder to swap the first scanner with the contact probe; command the contact probe to probe the gas turbine engine component.

In further examples of the present disclosure, including further examples of the above, depositing layers of powder comprises depositing layers of powder along a plane transverse to an intended axis of rotation of the gas turbine engine.

In further examples of the present disclosure, including further examples of the above, pre-heat treating the solidified layer induces a compressive residual stress into solidified layer of powder.

In further examples of the present disclosure, including further examples of the above, cold working comprises deep rolling the solidified layer of powder to obtain a desired microstructure and enhance the surface properties by inducing compressive residual stress.

In further examples of the present disclosure, including further examples of the above, pre-heat treating the solidified layer of powder locally generates a desired micro structure of the solidified layer of powder.

In further examples of the present disclosure, including further examples of the above, pre-heat treating the solidified layer of powder induces compressive a residual stress.

In further examples of the present disclosure, including further embodiments of the above exemplary embodiments, cold working comprises deep rolling a surface of the solidified layer of powder prior to depositing a subsequent layer of powder material.

In further examples of the present disclosure, including further examples of the above, the hybrid method further comprises deep rolling the solidified layer to obtain a desired strength of material and surface microstructure.

In further examples of the present disclosure, including further examples of the above, the hybrid method further comprises maintaining within the enclosure area an amount of oxygen at approximately 3 parts per million to approximately 180 parts per million prior to depositing the layers of powder.

In further examples of the present disclosure, including further examples of the above, pre-heat treatment comprises elevating within the enclosure area a temperature of approximately 450°F (232°C) to approximately 600°F (316 °C).

In further examples of the present disclosure, including further examples of the above, the hybrid method further comprises generating an automatic toolpath comprising: generating a first region of interest for repair and a second region for location and volume of material for repair of the gas turbine engine component using a second scan generated by the second scanner; extracting a cutting extraction data previously generated from a first scan of the gas turbine engine component prior to use; and comparing the cutting extraction data with the first region of interest for repair and the second region for location and volume of material for repair to generate the automatic toolpath.

In further examples of the present disclosure, including further examples of the above, the controller is further configured to: generate a digital map based on data from the first scanner; and store the digital map and probe data from the contact probe together in a database.

In further examples of the present disclosure, including further examples of the above, the controller is further configured to determine areas of interest from data received from one of the first scanner and the contact probe.

In further examples of the present disclosure, including further examples of the above, the first scanner is a coordinate measuring machine (CMM) and the second scanner is a three-dimensional scanner.

In further examples of the present disclosure, including further examples of the above, the controller is further configured to: command the second scanner to generate a second scan comprising a first region of interest for repair and a second region for location and volume of material for repair of the gas turbine engine component; command a database or memory to extract a cutting extraction data previously generated from a first scan of the gas turbine engine component prior to use; and command the database or memory to compare the cutting extraction data with the second scan to generate an automatic toolpath.

In further examples of the present disclosure, including further examples of the above, the contact probe is configured to be in electronic communication with the controller in response to being coupled to the holder.

In further examples of the present disclosure, including further examples of the above, the controller is configured to command the contact probe to probe the gas turbine engine component in areas of interest determined based on the first scanner scanning the gas turbine engine component.

In further examples of the present disclosure, including further examples of the above examples, the second energy source achieves a pre-heat treatment temperature range of approximately 450°F (232 °C) to approximately 600°F (316 °C).

In further examples of the present disclosure, including further examples of the above, the sensor maintains within the enclosure an amount of oxygen of approximately 3 parts per million to approximately 180 parts per million.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1A is a schematic view of an exemplary gas turbine engine.
FIG. 1B illustrates a cross-sectional view of an exemplary high-pressure compressor, in accordance with various embodiments.
FIG. 1C illustrates exemplary models such as (a) an exemplary stock model to fabricate an IBR; (b) an exemplary in-process model for an IBR prior to finishing; and, (c) an exemplary part model for an IBR; that are all available in the exemplary database(s) disclosed herein.
FIG. 1D illustrates how an exemplary stock model for an IBR is obtained by removing the exemplary part model for an IBR illustrated in FIG. 1C(c) from the exemplary in-process model illustrated in FIG. 1C(b).
FIG. 2A illustrates an exemplary repair process for an exemplary integrally bladed rotor, in accordance with various embodiments.
FIG. 2B illustrates a schematic view of an exemplary system for repairing an integrally bladed rotor, in accordance with various embodiments.
FIG. 3A illustrates a perspective view of an exemplary bladed rotor inspection system, in accordance with various embodiments.
FIG. 3B is a photograph depicting the bladed rotor inspection system of FIG. 3A housed within an exemplary enclosure area.
FIG. 4 illustrates a schematic view of an exemplary control system for an exemplary bladed rotor inspection system, in accordance with various embodiments.
FIG. 5 illustrates an exemplary process performed by an exemplary control system for an exemplary bladed rotor inspection system, in accordance with various embodiments.
FIG. 6 illustrates a perspective view of an exemplary bladed rotor inspection system, in accordance with various embodiments.
FIG. 7 illustrates a schematic view of an exemplary control system for an exemplary bladed rotor inspection system, in accordance with various embodiments.
FIG. 8 illustrates a process performed by an exemplary control system for an exemplary bladed rotor inspection system, in accordance with various embodiments.
FIG. 9 illustrates a process performed by an exemplary control system for an exemplary bladed rotor inspection system, in accordance with various embodiments;
FIG. 10 illustrates a schematic view of an exemplary control system for an exemplary bladed rotor inspection system, in accordance with various embodiments.
FIG. 11 illustrates a process performed by an exemplary control system for an exemplary bladed rotor inspection system, in accordance with various embodiments.
FIG. 12 illustrates a perspective view of an exemplary bladed rotor inspection system, in accordance with various embodiments.
FIG. 13 is a schematic view of an exemplary hybrid additive/subtractive/surface enhancement manufacturing system that can be used for producing an exemplary turbine disk with customized material properties and residual stress profile, in accordance with various embodiments.
FIG. 14 is a schematic illustration of the exemplary hybrid method for fabricating an exemplary layered turbine disk having varied material properties and localized compressive residual stress profile, in accordance with various embodiments.
FIG. 15 is another schematic view of the exemplary process for fabricating an exemplary turbine disk, in accordance with various embodiments.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Every process is typically performed at different machine to obtain a good form accuracy and surface finish. In addition to large grain size obtained during DED process, the development of fully integrated repair process solution represents a significant challenge for reducing adoption barriers such as repair versatility, capital investment, time to deploy, safety, and data flow management. The present disclosure is directed to an exemplary hybrid additive/mechanical surface treatment/subtractive process that may be performed in an exemplary single machine to control microstructure evolution, in addition to building an exemplary digital thread technique to integrate data within a representative process chain for an exemplary fully automatic repair process.

The hybrid DED and mechanical surface treatment processes, and related apparatus, disclosed herein successfully obtains equiaxed grains within the deposited layer at the time of deposition. Using a deformation force of up to 1,000 lbs. (454 kg), the applied mechanical surface treatment process refines the grain structure and changes the large, elongated, columnar grains having strong orientation texture into smaller, equiaxed grains with a weak texture. And, the hybrid DED process may be applied for repairing different IBR components at relatively low temperature(s).

The aforementioned exemplary single machine may include an exemplary enclosure to retain and provide a protective gas atmosphere for DED Ti-6Al-4V alloy due to its high reactivity with interstitial elements including oxygen, nitrogen and carbon. The exemplary cost-effective enclosure may reduce the interstitial element pickup for Ti-6Al-4V alloy builds produced by the DED process, using both fresh and recycled feedstock powders. Those Ti64 layers deposited for repair may be produced by exposing the builds to argon or helium atmospheres having a controlled oxygen content containing from approximately 3 ppm to approximately 180 ppm. The exemplary enclosure being utilized during DED deposition may prevent the effects the interstitial element pickup, and may promote the evolution of microstructure and mechanical properties when manufacturing Ti-6Al-4V alloy by the DED process.

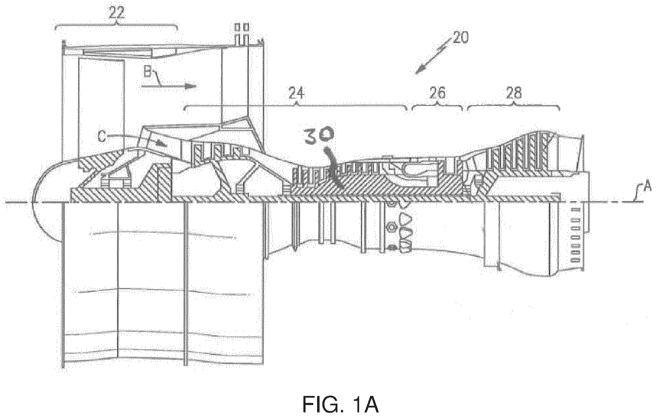

FIG. 1A schematically illustrates an exemplary gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high-pressure exhaust gas stream that expands through the turbine section 28 where energy is extracted and utilized to drive the fan section 22 and the compressor section 24 comprising at least a high-pressure compressor 30 centrally disposed about and transverse to an intended axis of rotation A.

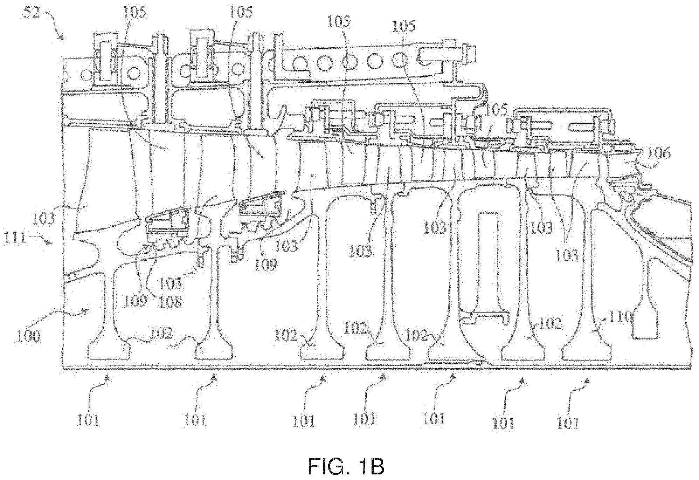

In various embodiments, and with reference to FIG. 1B, the high-pressure compressor 30 of the compressor section 24 of gas turbine engine 20 is provided. The high-pressure compressor 30 includes a plurality of blade stages 101 (i.e., rotor stages) and a plurality of vane stages 105 (i.e., stator stages). The blade stages 101 may each include an integrally bladed rotor ("IBR") 100, such that the blades 103 and rotor disks 102 are formed from a single integral component (i.e., a monolithic component formed of a single piece). The blades 103 extend radially outward from the rotor disk 102. The gas turbine engine 20 may further include an exit guide vane stage 106 that defines the aft end of the high-pressure compressor 30. Although illustrated with respect to high-pressure compressor 30, the present disclosure is not limited in this regard. For example, the low-pressure compressor 44 may include a plurality of blade stages 101 and stator stages 105, each blade stage in the plurality of blade stages 101 including the IBR 100 and still be within the scope of this disclosure. In various embodiments, the plurality of blade stages 101 form a stack of IBRs 110, which define, at least partially, a rotor module of the high-pressure compressor 30 of the gas turbine engine 20.

In various embodiments, an IBR 100 disclosed herein may comprise a knife edge 108 of a knife edge seal assembly 109. The knife edge 108 is disposed between adjacent rotor stages in the plurality of blade stages 101 and configured to interface with a vane assembly in the plurality of vane stages 105. In various embodiments, the knife edge seal assembly 109 is configured to seal air flow from core flow path C from FIG. 1A during operation of the gas turbine engine 20 from FIG. 1A.

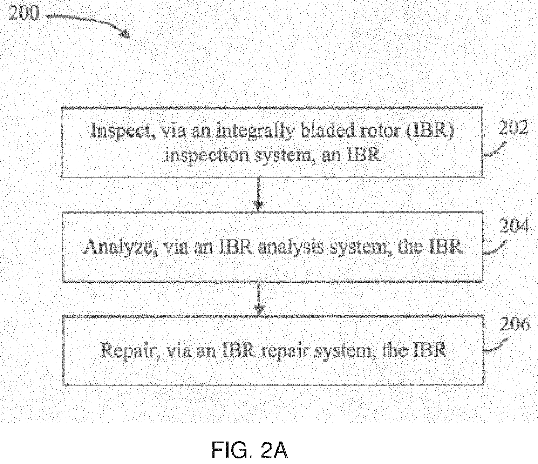

Referring now to FIG. 2A, a method 200 for repairing an IBR 100 from FIG. 1B from a compressor section (e.g., compressor section 24) of a gas turbine engine 20 from FIG. 1A is illustrated, in accordance with various embodiments. For example, after a predetermined number of flight cycles, or due to an unscheduled maintenance, a gas turbine engine 20 from FIG. 1A is in operation, the method 200 may be performed for one or more of IBR 100 in the compressor section 24 of the gas turbine engine 20. In various embodiments, method 200 may be performed for IBRs 100 from several gas turbine engines (e.g., in accordance with gas turbine engine 20), which may facilitate various potential repair options as described further herein.

The method 200 comprises inspecting, via an IBR inspection system, an IBR 100 (step 202). As described further herein, step 202 may be performed for numerous IBRs 100 prior to proceeding to step 204. In various embodiments, step 202 may be performed for a single IBR 100 prior to proceeding to step 204. The present disclosure is not limited in this regard.

In various embodiments, inspecting the IBR comprises scanning, via the IBR inspection system, the IBR 100. In this regard, the IBR inspection system may comprise an optical scanner (e.g., structured light scanners, such as white light scanners, structured blue light scanners, or the like) and/or a coordinate-measuring machine. The present disclosure is not limited in this regard. In response to scanning the IBR 100, a digital representation of the IBR 100 (e.g., a point cloud, a surface model, or the like) is received by a controller and converted to a three-dimensional ("3D") model (e.g., a Computer-Aided Design (CAD) model or Finite Element Model (FEM). In the alternative, the IBR inspection system may comprise a tracking 3D scanner. In response to 3D scanning the IBR 100, a 3D digital representation of the IBR 100 is received by a controller as a 3D model. In any aforementioned exemplary embodiment, the resultant three-dimensional model may be utilized for analysis by super imposing the scanned CAD model to the original CAD model of the IBR. Subtracting the scanned CAD model from the original CAD model will identify the areas on the IBR 100 to be repaired in step 204 of method 200. For example, the aforementioned 3D model(s), e.g., computer Aided Design (CAD) model, may be utilized in fully automated manufacturing process(es), e.g., a Computer-Aided Manufacturing (CAM) process, to generate toolpaths that drive machine tools to turn designs into physical parts.

The method 200 further comprises analyzing, via an IBR analysis system, the IBR (step 204). In various embodiments, by inspecting a plurality of IBRs in step 202, a system level analysis of various repair options may be performed in step 204. For example, the three-dimensional model produced from step 202 may be used as an input for blade level analysis (e.g., low-cycle fatigue, high cycle fatigue, Goodman diagram analysis, frequency, modal assurance criterion, etc.), stage level analysis (e.g., mistuning, aerodynamic performance, fatigue, imbalance, solidity, area and speed rotor sizing, etc.), and/or module level analysis (e.g., aerodynamic performance, compressor stack stiffness, clocking, clearances, axial gapping, imbalance, secondary flow influence, etc.). In this regard, by generating a three-dimensional model via step 202 outlined above, various forms of analysis may be performed to generate an optimal repair configuration (e.g., optimized for aerodynamic performance, optimized for cost of repair, etc.). The optimal repair configuration may be for an airfoil of a respective IBR 100, for the respective IBR 100 as a whole, or for stack of IBRs 110 from FIG. 1B. The present disclosure is not limited in this regard.

The method 200 further comprises repairing, via an IBR repair system, the IBR (step 206). In various embodiments, a repair model may be generated from the analyzing step 204 of method 200. In various embodiments, a plurality of repair models may be generated based on various factors as outlined previously herein. In this regard, a repair process may be determined based on the analyzing step 204. In various embodiments, the repair performed in step 206 may be a partial repair. For example, in the analyzing step 204, optimal repair configurations for remaining life of the IBR 100 may be determined as well. For example, typical repairs are determined based on the IBR 100 meeting manufacturing tolerances/specifications and meeting full life (e.g., 25,000 flight cycles, 50,000 flight cycles or the like). If the IBR 100 is set for only 10,000 additional flight cycles of when the IBR 100 is originally designed for 50,000 flight cycles, the analysis in step 204 may account for that and provide a partial repair option that meets full life to accomplish a faster and/or less expensive repair.

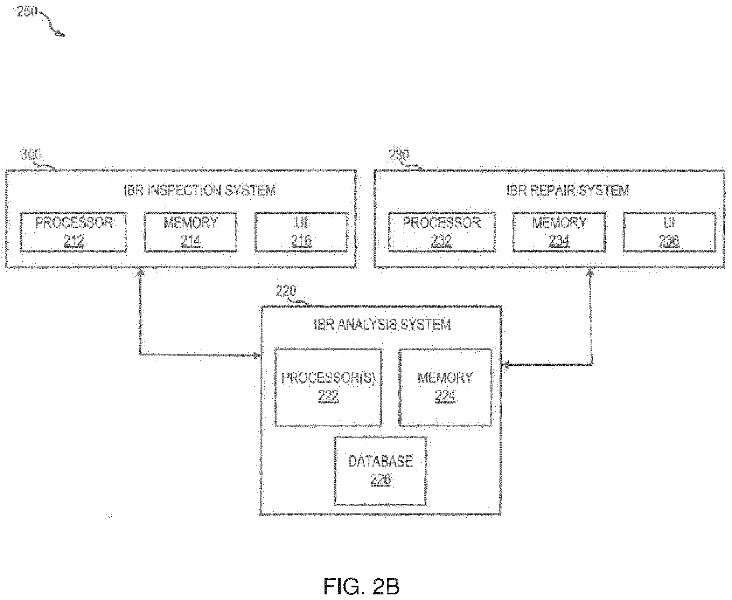

Referring now to FIG. 2B, a system 250 for repairing an IBR 100 is illustrated, in accordance with various embodiments. In various embodiments, the system 250 includes an IBR inspection system 300, an IBR analysis system 220, and an IBR repair system 230. Although illustrated as separate systems with separate processors (e.g., processors 212, 222, 232), the present disclosure is not limited in this regard. For example, the system 250 may include a single processor, a single memory, and a single user interface and still remain within the scope of this disclosure.

Similarly, although IBR inspection system 300 and IBR repair system 230 are illustrated as separate systems with separate processors, memories and user interfaces, the present disclosure is not limited in this regard. For example, the IBR inspection system 300 and the IBR repair system 230 may be combined into a single system that communicates with the IBR analysis system 220, in accordance with various embodiments.

In various embodiments, the IBR analysis system 220 may include one or more processors 222. In this regard, the IBR analysis system 220 may be configured to process a significant amount of data during the analysis step 204 from method 200. In this regard, the IBR analysis system 220 may be configured for remote computing (e.g., cloud-based computing), or the like. Thus, a processing time and a volume of data analyzed may be greatly increased relative to typical repair systems, in accordance with various embodiments.

In various embodiments, the IBR inspection system 300, the IBR analysis system 220, and the IBR repair system 230 each include a computer system comprising a processor (e.g., processor 212, processor(s) 222, and/or processor 232) and a memory (e.g., memory 214, memory 224, memory 234). The IBR inspection system 300 and the IBR repair system 230 may each comprise a user interface (UI) (e.g., UI 216, UI 236). In various embodiments, the IBR inspection system 201 and the IBR repair system 230 may utilize a single user interface to control both systems. The present disclosure is not limited in this regard.

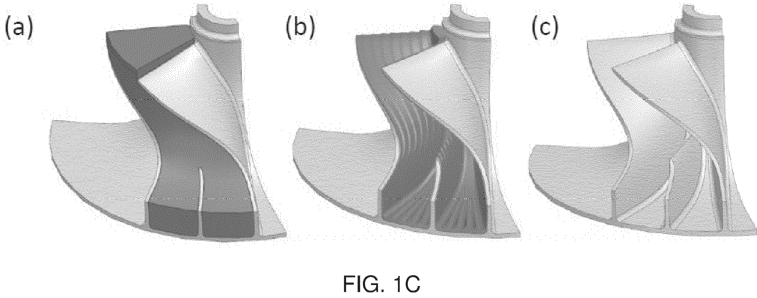

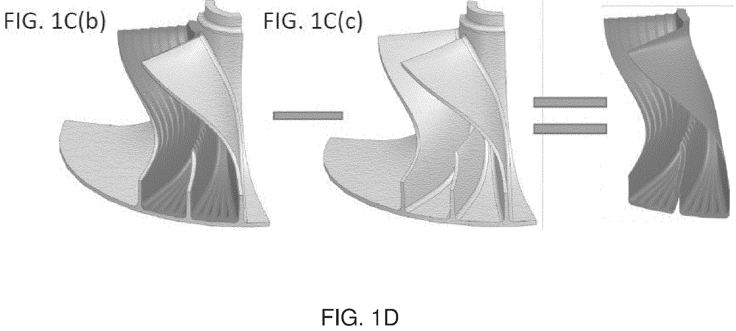

The IBR analysis system 220 may further comprise a database 226. In various embodiments, the database 226 comprises various stored data for use in the IBR analysis system 220. The database 226 may include an inspected IBR database (e.g., with data from various prior inspected IBRs), a repair data database (e.g., with data from various prior repairs performed/approved), a load data database (e.g., with engine load data from structural and/or aerodynamic analysis), a test data database (e.g., with engine specific test data used for validation of structural and/or aerodynamic analysis), a design data database (e.g., with design models having nominal dimensions according to a product definition of the IBR 100), and/or a material data database (e.g., with material for each component utilized in an analysis step 204 of method 200), in accordance with various embodiments. For example, FIG. 1C illustrates exemplary models available in the aforementioned databases 226. For instance, FIG. 1C(a) illustrates an exemplary stock model to fabricate an IBR. FIG. 1C(b) illustrates an exemplary in-process model of an IBR prior to finishing. And, FIG. 1C(c) illustrates an exemplary part model of an IBR. With these exemplary models of FIG. 1C(a)-(c), an exemplary stock material for a finishing operation may be obtained by the exemplary part model for an IBR illustrated in FIG. 1C(c) being removed from the exemplary in-process model illustrated in FIG. 1C(b) as FIG. 1D illustrates. Referring to FIG. 1D, the exemplary stock model to make the part will then be used for fully automatic toolpath generation as discussed next.

These aforementioned exemplary models of FIGS. 1C(c) and 1D may be utilized in CAM processes to generate machine codes for both deposition and machining process. For example, after both a region of interest for repair and a region for location and volume of material repair are identified, cutter location data can be extracted accordingly from the previously generated toolpath data. After post processing, a program for finishing those aforementioned two regions can be generated automatically, so no manual programming work or manual polishing is needed. Any IBR can be repaired on any stage of the disk. Different from other techniques, the in-process model together with the toolpath is integrated into the repair process, not just nominal part model, for both material deposition, deep rolling, and finishing, providing advantages in speed and processing time.

System 250 may be configured for inspecting (e.g., step 202 of method 200), analyzing (e.g., step 204 of method 200), and repairing (e.g., step 206 of method 200) an IBR 100, in accordance with various embodiments. In this regard, the repair process for an IBR 100 may be fully automated, in accordance with various embodiments, as described further herein.

In various embodiments, and as shown in FIG. 2B, systems 220, 230, 300 may each store a software program configured to perform the methods described herein in a respective memory 214, 224, 234 and run the software program using the respective processor 212, 222, 232. The systems 220, 230, 300 may include any number of individual processors 212, 222, 232 and memories 214, 224, 234. Various data may be communicated between the systems 220, 230, 300 and a user via the user interfaces (e.g., UI 216, UI 236). Such information may also be communicated between the systems 220, 230, 300 and external devices, database 226, and/or any other computing device connected to the systems 220, 230, 300 (e.g., through any network such as a local area network (LAN), or wide area network (WAN) such as the Internet).

In various embodiments, systems 220, 230, 300 depicted in FIG. 2B, each processor 212, 222, 232 may retrieve and executes instructions stored in the respective memory 214, 224, 234 to control the operation of the respective system 220, 230, 300. Any number and type of processor(s) (e.g., an integrated circuit microprocessor, microcontroller, and/or digital signal processor (DSP)), can be used in conjunction with the various embodiments. The processor 212, 222, 232 may include, and/or operate in conjunction with, any other suitable components and features, such as comparators, analog-to-digital converters (ADCs), and/or digital-to-analog converters (DACs). Functionality of various embodiments may also be implemented through various hardware components storing machine-readable instructions, such as application-specific integrated circuits (ASICs), field-programmable gate arrays (FPGAs) and/or complex programmable logic devices (CPLDs).

The memory 214, 224, 234 may include a non-transitory computer-readable medium (such as on a CD-ROM, DVD-ROM, hard drive or FLASH memory) storing computer-readable instructions stored thereon that can be executed by the processor 212, 222, 232 to perform the methods of the present disclosure. The memory 144 may include any combination of different memory storage devices, such as hard drives, random access memory (RAM), read only memory (ROM), FLASH memory, or any other type of volatile and/or nonvolatile memory.

The system 230, 300 may receive and display information via a respective user interface (e.g., UI 236 and/or UI 216). The user interfaces (e.g., UI 236 and/or UI 216) include various peripheral output devices (such as monitors and printers), as well as any suitable input or control devices (such as a mouse and keyboard) to allow users to control and interact with the software program.

In various embodiments, IBR inspection system 300 and IBR repair system 230 may each be in electronic communication with IBR analysis system 220, directly or via a respective user interface (e.g., UI 236 and/or UI 216). IBR inspection system 300 and IBR repair system 230 may comprise any suitable hardware, software, and/or database components capable of sending, receiving, and storing data. For example, IBR inspection system 300 and/or IBR repair system 230 may comprise a personal computer, personal digital assistant, cellular phone, smartphone (e.g., those running UNIX-based and/or Linux-based operating systems such as IPHONE^{®}, ANDROID^{®}, and/or the like), loT device, kiosk, and/or the like. IBR inspection system 300 and/or IBR repair system 230 may comprise an operating system, such as, for example, a WINDOWS^{®} mobile operating system, an ANDROID^{®} operating system, APPLE^{®} IOS^{®}, a LINUX^{®} operating system, and the like. IBR inspection system 300 and/or IBR repair system 230 may also comprise software components installed on IBR inspection system 300 and/or IBR repair system 230 and configured to enable access to various system 250 components. For example, IBR inspection system 300 and/or IBR repair system 230 may comprise a web browser (e.g., MICROSOFT INTERNET EXPLORER^{®}, GOOGLE CHROME^{®}, APPLE SAFARI^{®} etc.), an application, a micro-app or mobile application, or the like, configured to allow the IBR inspection system 300 and/or IBR repair system 230 to access and interact with IBR analysis system 220 (e.g., directly or via a respective UI, as discussed further herein).

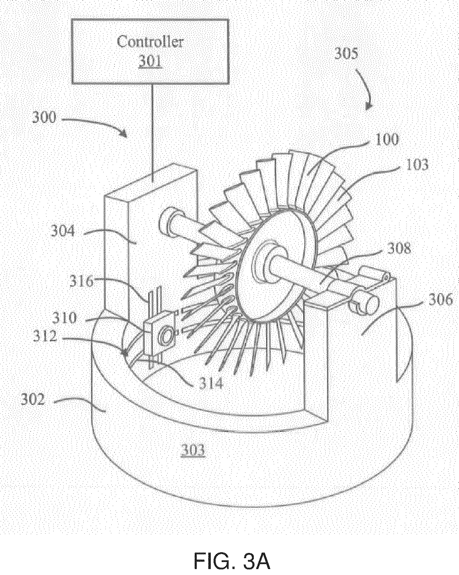

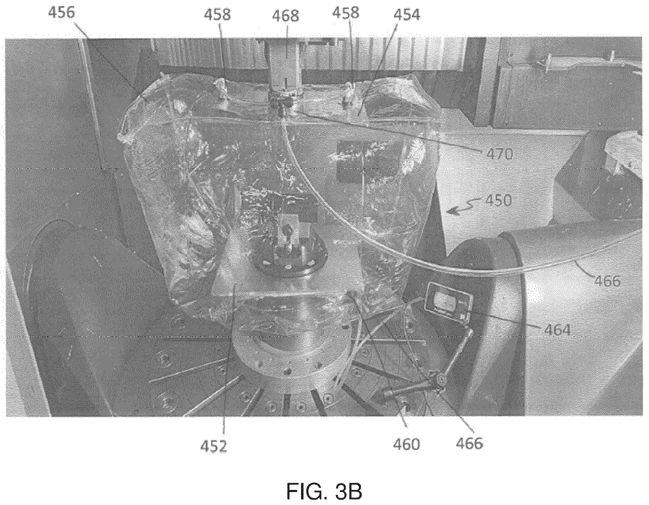

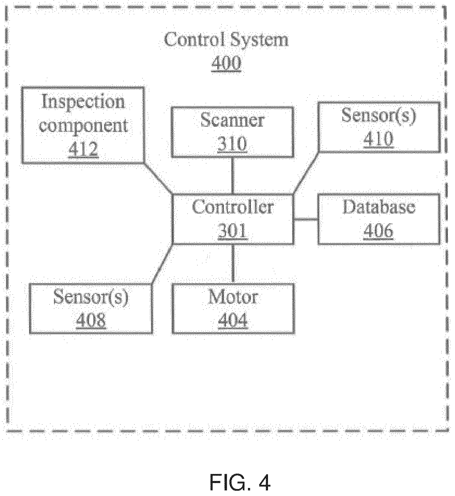

Referring now to FIGS. 3A, 3B and 4, a perspective view of an inspection system 300 for use in an inspection step 202 of method 200 from FIG. 2 and a control system 400 for the inspection system 300 (FIG. 4) are illustrated in accordance with various embodiments. In various embodiments, the inspection system 300 comprises a controller 301, a support structure 302, a shaft 308, and a tracking 3D scanner 310. In various embodiments, the control system 400 comprises the controller 301, the tracking 3D scanner 310, a memory 402, a motor 404, a database 406, and sensor(s) 408, sensor(s) 410, and inspection component 412. In various embodiments, the inspection system 300 comprises a bladed rotor inspection device 305.

Referring now to FIG. 3A, the support structure 302 comprises a base 303, a first vertical support 304, a second vertical support 306. In at least one embodiment, the base 303 may be annular in shape. Although illustrated as being annular, the present disclosure is not limited in this regard. For example, the base 303 may be semi-annular in shape, a flat plate, or the like. In various embodiments, the vertical supports 304, 306 extend vertically upward from the base 303 on opposite sides of the base (e.g., 180 degrees apart, or opposite sides if the base 303 where a square plate). The shaft 308 extends from the first vertical support 304 to the second vertical support 306. The shaft 308 may be rotatably coupled to the motor 404, which may be disposed within the first vertical support 304, in accordance with various embodiments. The shaft 308 may be restrained vertically and horizontally at the second vertical support 306 but free to rotate relative to the second vertical support about a central longitudinal axis of the shaft 308. In various embodiments, a bearing assembly may be coupled to the second vertical support 306 to facilitate rotation of the shaft, in accordance with various embodiments.

Referring now to FIG. 3B, the inspection system 300 may be housed within an exemplary enclosure area 450. In at least one exemplary embodiment, the enclosure area 450 may comprise at least one support plate 452, 454; a transparent enclosure material 456; at least one gas inlet 458; a gas outlet 460; a sensor for monitoring an oxygen concentration 462; an oxygen concentration display 464; at least one tube 466 (or tubing 466); a machine spindle 468; and, a laser head 470. Throughout the exemplary process disclosed herein, the gas inlet 458 may supply an anaerobic atmosphere, e.g., argon, helium, and related noble gases, and, in turn, the gas outlet 460 may purge an amount of oxygen present therein. During operation, the oxygen concentration within the enclosure may be approximately 3 ppm to approximately 180 ppm.

In at least one embodiment, the support plate 452, 454, the transparent enclosure material 456, and tubing 466 may comprise materials, respectively, that are capable of withstanding the operating conditions of the exemplary process disclosed therein. For example, suitable material for the support plate 452, 454 may include, but is not limited to, aluminum and other related materials. Likewise, suitable material for both the transparent enclosure material 456 and tubing 466 may include, but is not limited to, a durable plastic and related polymeric material. The sensor for monitoring an oxygen concentration 462 may be any sensor capable of monitoring the amount or concentration of oxygen within the enclosure area 450 while performing the exemplary process disclosed herein. The oxygen concentration display 464 may be any display capable of visually communicating the amount or concentration of oxygen within the enclosure area 450.

In various embodiments, the IBR 100 to be inspected in accordance with the inspection step 202 of the method 200 via the inspection system 300 may be coupled to the shaft 308 (e.g., via a rigid coupling, or the like). The present disclosure is not limited in this regard, and the shaft 308 may be coupled to the IBR 100 to be inspected by any method known in the art and be within the scope of this disclosure.

In various embodiments, the tracking 3D scanner 310 is operably coupled to a track system 312. In various embodiments, the track system 312 may comprise a curved track 314 and a vertical track 316. The vertical track 316 may be slidingly coupled to the vertical track 316 (e.g., via rollers or the like). The tracking 3D scanner 310 may be slidingly coupled to the vertical track 316 (e.g., via a conveyor belt, linkages or the like). In various embodiments, the tracking 3D scanner 310 is configured to extend from the track system 312 towards the IBR 100 during inspection of the IBR 100 in accordance with step 202 of method 200. In this regard, the inspection system 300 may further comprise a robot arm, an actuator or the like. Although described herein with tracks 314, 316, and a robot arm or actuator, the present disclosure is not limited in this regard. For example, any electronically controlled (e.g., wireless or wired) component configured to move the tracking 3D scanner 310 in six degrees of freedom relative to the IBR 100 is within the scope of this disclosure. In various embodiments, the inspection component 412 comprises rollers for the curved track, a conveyor belt for the vertical track, and/or a holder coupled to the tracking 3D scanner 310. In various embodiments, the inspection component 412 comprises only a holder. In various embodiments, the inspection component 412 comprises only the rollers for the curved track 314 and the conveyor belt or linkages for the vertical track 316. The present disclosure is not limited in this regard. In various embodiments, the inspection component 412 is stationary and the IBR 100 being inspected is moveable along three-axis, five-axis, or the like. The present disclosure is not limited in this regard.

In various embodiments, the tracking 3D scanner 310 comprises a coordinate measuring machine (CMM), a mechanical scanner, a laser scanner, a structured scanner (e.g., a white light scanner, a blue light scanner, etc.), a non-structured optical scanner, a non-visual scanner (e.g., computed tomography), or the like. In various embodiments, the tracking 3D scanner 310 is a blue light scanner. In various embodiments, the tracking 3D scanner 310 may be swapped with another scanner at any point during an inspection step 202 as described further herein. In various embodiments, the inspection system 300 may be configured to swap the tracking 3D scanner 310 with a different scanner during the inspection step 202 of method 200 as described further herein.

A "blue light scanner" as disclosed herein refers to a non-contact structure light scanner. The blue light scanner may have a scan range of between 100×75 mm² in accordance with various embodiments. In various embodiments, an accuracy of the blue light scanner may be between 0.005 and 0.015 mm. In various embodiments, the blue light scanner may be secured by a machine spindle. The machine spindle may facilitate the IBR's movement in the x-, y- and z- directions and rotation in the clockwise and counterclockwise directions so as to facilitate generating the CAD model. With the assistance of the machine spindle, the blue light scanner may be able to determine distances between adjacent points in the point cloud of between 0.04 and 0.16 mm as measured across three axes. In various embodiments, a volume accuracy of the blue light scanner may be approximately 0.8 mm/m. In various embodiments, a scan depth may be between approximately 100 and 400 mm. In various embodiments, the blue light scanner may comprise a light source including a blue LED. In this regard, the blue light scanner may be configured to emit an average wavelength between 400 and 450 nm, in accordance with various embodiments. Although described with various specifications herein, the blue light scanner is not limited in this regard, and one skilled in the art may recognize the parameters of the blue light scanner may extend outside the exemplary ranges. Use of a blue light scanner provides a high-resolution point cloud for a three-dimensional object.

The controller 301 may be integrated into computer system of the inspection system 300 (e.g., in processor 212 and/or memory 214 from FIG. 2B) or the machine (See FIG. 3). In various embodiments, the controller 301 may be configured as a central network element or hub to various systems and components of the control system 400. In various embodiments, controller 301 may comprise a processor (e.g., processor 212). In various embodiments, controller 301 may be implemented as a single controller (e.g., via a single processor 212 and associated memory 214). In various embodiments, controller 301 may be implemented as multiple processors (e.g., a main processor and local processors for various components). The controller 301 can be a general-purpose processor, a digital signal processor (DSP), an application specific integrated circuit (ASIC), a field programmable gate array (FPGA) or other programmable logic device, discrete gate or transistor logic, discrete hardware components, or any combination thereof. The controller 301 may comprise a processor configured to implement various logical operations in response to execution of instructions, for example, instructions stored on a non-transitory, tangible, computer-readable medium configured to communicate with the controller 301. System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

In various embodiments, the motor 404 of the control system 400 is operably coupled to the shaft 308 of the control system 400. In various embodiments, the motor 404 may comprise a direct current (DC) stepper, an alternating current (AC) motor or the like. The present disclosure is not limited in this regard. In various embodiments, the sensor(s) 408 include Hall effect sensor(s), optical sensor(s), resolver(s), or the like. In various embodiments, sensor(s) 408 may include sensor(s) configured to detect an angular position of the shaft 308 during an inspection step for an IBR 100 (e.g., step 202 from method 200). In this regard, during inspection of the IBR 100, the controller 301 receives sensor data from the sensor(s) 408. The controller 301 can utilize the sensor data received from the sensor(s) 408 to correlate an angular position of the IBR 100 being inspected with a location of the tracking 3D scanner 310 as described further herein. In various embodiments, in an application with a robot arm, the IBR 100 may remain stationary throughout an inspection process (e.g., inspection step 202 of method 200). Thus, coordinates of the holder may be determined via sensor(s) 408 in a similar manner to orient and construct the IBR 100 being inspected as described further herein.

In various embodiments, the sensor(s) 410 are configured to detect a position of the tracking 3D scanner 310 during the inspection step 202 of method 200. In this regard, sensor(s) 410 may be position sensors (e.g., capacitive displacement sensors, eddy-current sensors, Hall effect sensors, inductive sensors, optical sensors, linear variable differential transformer (LVDT) sensors, photodiode array sensors, piezoelectric sensors, encoders, potentiometer sensors, ultrasonic sensors or the like). The present disclosure is not limited in this regard. Thus, during inspection of the IBR 100 in accordance with step 202 of method 200, controller 301 is able to determine a location of the tracking 3D scanner 310 and an angular position of the IBR 100 throughout the inspection. Thus, based on the location of the tracking 3D scanner 310, an angular location of the IBR 100 and scanning data received from the tracking 3D scanner 310, a digital map (e.g., a robust point cloud) can be generated during the inspection step 202 of method 200 for the IBR 100 being inspected. In various embodiments, the point cloud encompasses the entire IBR 100 (e.g., between 95% and 100% of a surface area of the IBR 100, or between 99% and 100% of the surface area of the IBR 100).

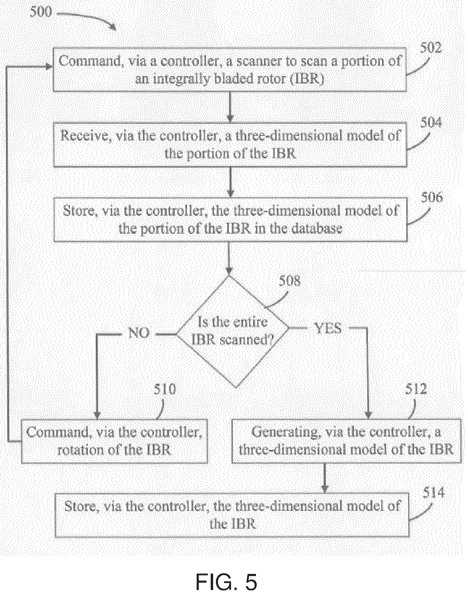

Referring now to FIG. 5, a process 500 for inspecting an IBR 100 that is performed by the control system 400 of the inspection system 300 is illustrated, in accordance with various embodiments. In various embodiments, the process 500 comprises commanding, via controller 301 and tracking 3D scanner 310 to scan a portion of the IBR 100 (step 502). In various embodiments, the portion of the IBR 100 may comprise a blade 101 or the like. In various embodiments, a root, a platform, or the like of the IBR 100 may be the portion. The present disclosure is not limited in this regard. In various embodiments, the root and the platform of the IBR 100 may be scanned along with the blade 101. In various embodiments, multiple blades 101 may be scanned with the portion of the IBR 100.

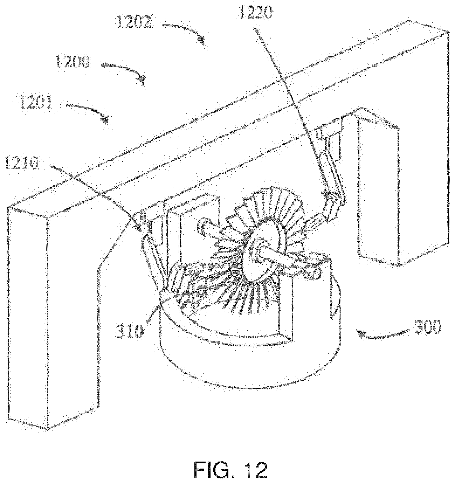

In various embodiments, commanding the tracking 3D scanner 310 in step 502 may further comprise commanding rollers of the curved track 314, commanding a conveyor belt or linkages of the vertical track 316 or the like in conjunction with scanning via the tracking 3D scanner 310. In this regard, the controller 301 may provide a predetermined toolpath for the tracking 3D scanner 310 to scan the portion of the IBR 100, in accordance with various embodiments. However, the present disclosure is not limited in this regard, for example, step 502 may include commanding a scanner coupled to a holder (e.g., a holder 1210 in FIG. 12) to scan a portion of the IBR 100, or may include commanding a five-axis system to orient the IBR 100 for scanning, or the like. Thus, step 502 may include any command to position the IBR 100 being inspected relative to a scanner and scanning the portion of the IBR 100, in accordance with various embodiments.

The process 500 further comprises receiving, via the controller, a three-dimensional model of the first portion of the IBR 100 (step 504). In various embodiments, the three-dimensional model is a digital map (e.g., a point cloud). In this regard, in response to utilizing a CMM scanner or a structured light scanner, the tracking 3D scanner 310 measures discrete points of surfaces of the portion of the IBR being scanned and transmits the discrete points to the controller 301. In various embodiments, the point cloud may be relative to a datum defined by the inspection system 300. For example, the shaft 308 may be configured to couple to the IBR 100 being inspected in exactly the same place every time. In this regard, a datum for the inspection system 300 may be defined in the memory (e.g., memory 214). In various embodiments, the datum is a center point of the IBR 100 (e.g., a center point of the disk of the IBR 100). Thus, the controller 301 is configured to determine a location of each point scanned via the tracking 3D scanner 310 based on the datum, a location of the tracking 3D scanner 310 when a scan occurs during step 502 from sensor(s) 410, measurement data from the tracking 3D scanner 310, and an angular position of the IBR 100 from sensor(s) 408.

The process 500 further comprises storing, via the controller 301, the three-dimensional model in a database 406 (step 506). Although described herein as intermittently storing scanned portions of the IBR 100, the present disclosure is not limited in this regard. For example, the tracking 3D scanner 310 may scan the entire IBR prior to transmitting the three-dimensional model to the controller 301 and still be within the scope of this disclosure. In this regard, the controller 301 may be configured to determine an amount of the IBR 100 that has been scanned based on the angular position of the IBR 100 and the position of the tracking 3D scanner 310 throughout step 502.

The process 500 further comprises determining whether the IBR has been scanned in its entirety (e.g., between 95% and 100% or between 99% and 100% or approximately 100%). In this regard, the process 500 may determine whether the tracking 3D scanner 310 has performed a scan at each predetermined arc angle (e.g., 1 degree, 3 degrees, 5 degrees, or the like) and a total angular rotation of the IBR 100 for the scanning process has reached 360 degrees.

If the entire IBR has not been scanned, the process 500 further comprises commanding, via the controller 301, rotation of the IBR 100 a fixed amount (e.g., 1 degree, 3 degrees, 5 degrees, 10 degrees, etc.). The present disclosure is not limited in this regard. The controller 301 may command the motor 404 to rotate the IBR 100 the fixed amount, in accordance with various embodiments.

In various embodiments, steps 502, 504, 506, 508 are repeated until the entire IBR is scanned according to step 508, at which point the process 500 further comprises generating, via the controller 301, a three-dimensional model of the IBR 100 (step 512). In this regard, in response to the tracking 3D scanner 310 being a CMM scanner or a structured light scanner, the controller 301 may stitch together the point clouds for each portion of the IBR scanned via step 502 to generate a robust point cloud of the entire IBR 100 (e.g., between 95% and 100% of an external surface area of the IBR 100, or between 99% and 100% of the external surface area of the IBR 100, or approximately 100% of the external surface area of the IBR 100). In various embodiments, the entire IBR 100 refers to approximately 100% of an external surface area of all the blades of the IBR 100.

In various embodiments, the process 500 further comprises storing, via the controller 301, the three-dimensional model of the IBR in the database 406. In this regard, the three-dimensional model may be utilized for analyzing the inspected IBR (e.g., in accordance with step 204 of method 200), determining a repair for the inspected IBR (e.g., based on step 204 of method 200) and/or in repairing the inspected IBR (e.g., in accordance with step 206 of method 200).

In various embodiments, the process 500 may provide a fully automated solution for generating a robust three-dimensional model (e.g., a point cloud) for an inspected IBR 100, in accordance with various embodiments.

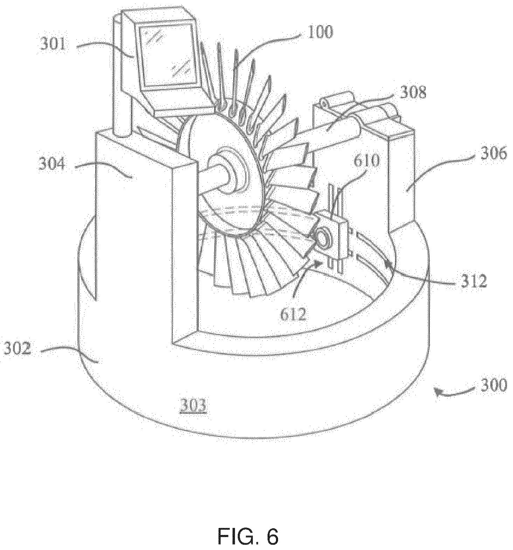

Referring now to FIG. 6, a perspective view of the inspection system 300 from FIG. 3 is illustrated, in accordance with various embodiments, with like numerals depicting like elements. In various embodiments, the inspection system 300 further comprises a second tracking 3D scanner 610. In various embodiments, the second tracking 3D scanner 610 may be in accordance with tracking 3D scanner 310 as described further herein. In various embodiments, the second tracking 3D scanner 610 is a different scanner than tracking 3D scanner 310 as described further herein. In various embodiments, the second tracking 3D scanner 610 is coupled to a second track system 612. The track system 612 may be in accordance with the track system 312, in accordance with various embodiments. In various embodiments the track system 612 is independent (i.e., not connected to), the track system 312. In this regard, an end of first track system 312 may be spaced apart from an end of the second track system 612, in accordance with various embodiments. As described further herein, the second tracking 3D scanner 610 may be configured for simultaneous scanning of the IBR 100 with the first tracking 3D scanner 310 (i.e., at a different portion), configured for scanning in response to determinations by the controller 301 based on scanning data received from the first tracking 3D scanner 310, or the like.

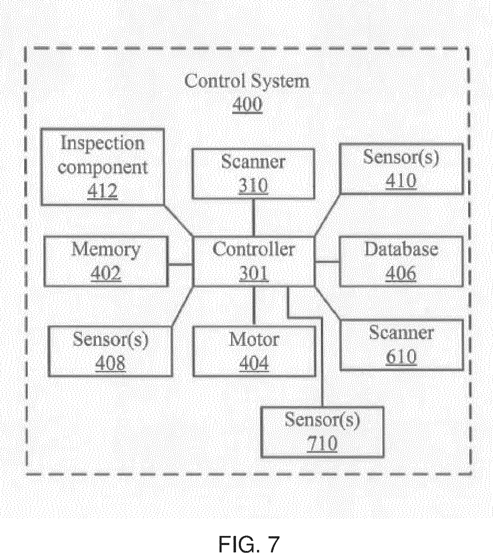

Referring now to FIG. 7, a schematic view of the control system 400 for the inspection system 300 is illustrated, in accordance with various embodiments, with like numerals depicting like elements. In various embodiments, the control system 400 further comprises the second tracking 3D scanner 610 and sensor(s) 710. Sensor(s) 710 may be in accordance with sensor(s) 410 described previously herein. In this regard, the sensor(s) 710 are configured to detect a location of the second sensor 710 to transmit to the controller for defining the three-dimensional model (e.g., a point cloud) as described previously herein.

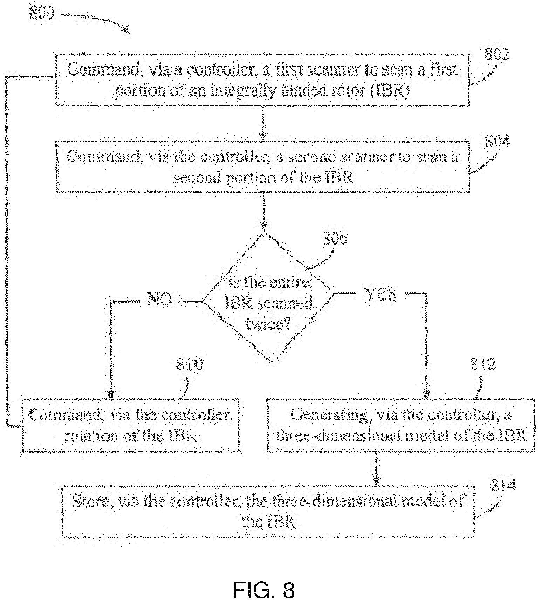

Referring now to FIG. 8, a process 800 for inspecting an IBR 100 that is performed by the control system 400 (from FIG. 7) of the inspection system 300 (from FIG. 6) is illustrated, in accordance with various embodiments. The process 800 comprises commanding, via a controller 301, a first tracking 3D scanner 310 to scan a first portion of an integrally bladed rotor (IBR) (step 802), and commanding, via the controller, a second scanner to scan a second portion of the IBR (step 804). In this regard, the tracking 3D scanners 310, 610 may be utilized simultaneously on distinct portions of the IBR, in accordance with various embodiments. In this regard, a single scan of the entire IBR may be halved in accordance with various embodiments. In various embodiments, utilizing two scanners (e.g., tracking 3D scanners 310, 610) may be used to enhance a fidelity (i.e., a point density) of the scan.

In this regard, in various embodiments, the process 800 further comprises determining whether the IBR has been scanned twice (step 806). For example, in a similar manner to process 500, the controller 301 may track an angular position of the IBR 100 throughout process 800. In response to the angular position reaching 360 degrees from an initial position, the controller 301 can determine that the IBR 100 has been scanned twice (i.e., an entire external surface area of the IBR 100 would be scanned by both the first tracking 3D scanner 310 and the second tracking 3D scanner 610).

In various embodiments, in response to the controller 301 determining the IBR 100 has not been scanned twice in step 806, the controller 301 may command rotation of the IBR in accordance with step 510 of process 500 described previously herein and revert back to step 802. In various embodiments, in response to determining the IBR 100 has been scanned twice in step 806, the process 800 may further comprise generating, via the controller, a three-dimensional model of the IBR (step 812).

In various embodiments, the three-dimensional model is a point cloud having a point density of approximately double that of a point density generated from process 500 (i.e., twice as many discrete points for the point cloud). In this regard, a higher fidelity scan of the IBR 100 may be achieved relative to process 500 in a similar amount of time. Although illustrated as being performed with two scanners (e.g., tracking 3D scanners 310, 610), the present disclosure is not limited in this regard. In various embodiments, generating the three-dimensional model of step 812 may include stitching together a first point cloud from the first scan with a second point cloud of the second scan. In this regard, the first scan may be used as a reference for stitching together the second scan, datums determined from the first scan may be utilized for stitching together the second scan, or any other method of stitching together a first point cloud with a second point cloud may be performed.

For example, a single tracking 3D scanner 310 could be utilized, the controller could continue process 500 until the IBR travelled 720 degrees (i.e., two revolutions), and achieve a similar point cloud to process 800. However, with the single scanner, the process would take twice as much time. Yet, a system cost may be reduced relative to a two-scanner configuration, in accordance with various embodiments.

In various embodiments, after generating the three-dimensional model in step 812, the three-dimensional model may be stored via the controller 301, in the database 406 in accordance with step 514 of process 500.

In various embodiments, IBR 100 may include sharp edges (e.g., leading edges, trailing edges, tips, etc.). Thus, proper, and accurate, tuning of the blades 103 is desirable. In various embodiments, tracking 3D scanners 310, 610 for the process 800 may both be structured light scanners, may be with a laser and a structured light scanner, or any other combination described previously herein. In this regard, a high-fidelity scan of the various sharp edges of the blades 103 for the IBR 100 being inspected may be achieved for use in analyzing in step 204 of method 200 and developing a repair process for the repair step 206 of method 200, in accordance with various embodiments.

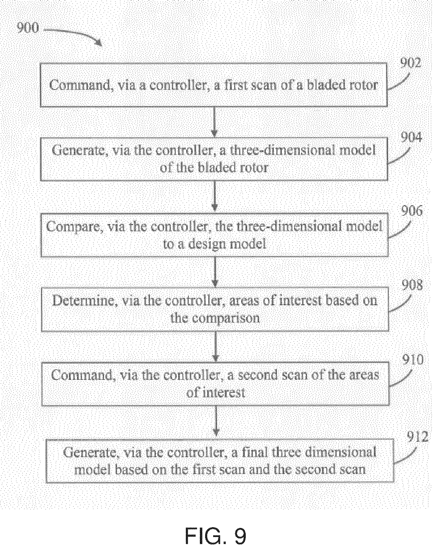

Referring now to FIG. 9, a process 900 for feedback driven scan configured to be performed by the control system 400 (e.g., FIG. 4 or FIG. 7) of the inspection system (e.g., FIG. 3 or FIG. 6), is illustrated, in accordance with various embodiments.

The process 900 comprises commanding, via the controller 301, a first scan of a bladed rotor (e.g., IBR 100) (step 902). The first scan of the bladed rotor may be in accordance with process 500 in accordance with various embodiments. In various embodiments, the first scan may be performed with a scanner configured to produce a quicker, lower density point cloud (e.g., a CMM). In this regard, the first scan of the bladed rotor may be considered a high-level initial scan of the bladed rotor, in accordance with various embodiments.

The process 900 further comprises generating, via the controller 301, a three-dimensional model (e.g., a point cloud) of the bladed rotor based on the first scan (step 904), and comparing, via the controller 301, the three-dimensional model to a design model for the bladed rotor being inspected (step 906). Although described herein with respect to comparing to a design model, the present disclosure is not limited in this regard. For example, the database 406 of the control system 400 may have various inspected bladed rotor point clouds stored therein. In various embodiments, the various inspected bladed rotors with point clouds in the database 406 may include designations (i.e., approved without repairs or the like). In this regard, the comparing step 906 may utilize previously approved inspected bladed rotor point clouds to compare the three-dimensional model generated from the first scan in step 904.

In various embodiments, the process 900 further comprises determining, via the controller 301, areas of interest on the bladed rotor based on the comparison in step 906 (step 908). Although described herein as the controller 301 determining the areas of interest, the present disclosure is not limited in this regard. For example, the controller 301 may be configured to transmit the digital data through an application-based software infrastructure that stores data on remote servers and may be configured for determining areas of interests of the IBR 100 (i.e., via cloud-based computing or the like), in accordance with various embodiments. For example, with brief reference to FIG. 2B, the controller 301 may transmit the digital data to the IBR analysis system 220 (e.g., via a WAN such as the Internet), the IBR analysis system 220 may perform analysis based on the three-dimensional model generated from the first scan in step 902, and the IBR analysis system 220 may output areas of interest to the IBR inspection system 300, in accordance with various embodiments. In this regard, the controller 301 may receive, via the processor, areas of interest on the bladed rotor after transmitting the digital data to a cloud-based computing software instead of performing steps 906 and 908 of process 900 and still be within the scope of this disclosure.

In various embodiments, the comparing and determining of steps 906, 908 of process 900 may be performed by manual processes. For example, fluorescent penetrant inspection (FPI) may be performed manually on the IBR 100. In response to performing the FPI, a person may determine areas of interest of the IBR and input coordinates of the respective areas of interest into the processor (e.g., via a graphical user interface (GUI) or the like). In this regard, the process 900 may include receiving, from a GUI, areas of interest for the IBR 100 based on performing FPI or any other manual inspection process, in accordance with various embodiments.

In this regard, based on the sensor data received from the first scan in step 902, and described previously herein with respect to process 500, the process 900 further comprises commanding, via the controller 301, a second scan of the areas of interest determined from step 908 (step 910). In various embodiments, the second scan may include multiple scans with the scanner used for the first scan (e.g., in response to the tracking 3D scanner 310 being a CMM and having only a single scanner configuration). In various embodiments, the second scan may be performed with a higher resolution scanner (e.g., a structured light scanner). In this regard, the first tracking 3D scanner 310 may comprise a CMM scanner configured to perform step 902 of process 900, and the second tracking 3D scanner 610 may comprise a structured light scanner configured to perform step 910 of process 900, or a structured light scanner with a more optimal focal length for a higher resolution image of a detailed area of the IBR. In various embodiments, the second scan may be performed after swapping out a first scanner with a second scanner (e.g., for an inspection system 300 with a single scanner configuration). In this regard, a CMM scanner used for step 902 may be swapped out with a structured light scanner prior to performing the second scan, in accordance with various embodiments. In various embodiments, the inspection system 300 may be configured to automatically swap the scanners (e.g., in a similar manner to a spindle of a Computer Numerical Control (CNC) machine swapping out one machining tool for another). The present disclosure is not limited in this regard.

In various embodiments, the areas of interest comprise areas that are outside a threshold tolerance of the respective comparison model (e.g., a design model or an approved inspected model). In various embodiments, based on determining a first blade has an area of interest from step 908, the controller 301 may identify adjacent blades to the first blade as areas of interest (e.g., immediately adjacent blades, blades that are within two blades from the first blade, or the like). In this regard, the adjacent blades may be held to tighter tolerances due to damage to the first blade, in accordance with various embodiments. Thus, the adjacent blades may receive an additional scan in step 910 as described further herein as a more denser point cloud for the adjacent blades may help facilitate a better repair disposition from the analyzing step 204 of method 200, in accordance with various embodiments.

In various embodiments, the process 900 further comprises generating, via the controller 301, a final three-dimensional model based on the first scan and the second scan (step 912). In this regard, a point density in the areas of interest may be significantly greater than a point density outside the areas of interest, in accordance with various embodiments. In various embodiments, the process 900 facilitates efficient scanning of bladed rotors with a focus on achieving high definition of potential problem areas (e.g., defects or the like). In this regard, by inputting the point cloud developed from process 900 into an IBR analysis system from step 204 of method 200, a margin of safety relative to any defect areas may be reduced, in accordance with various embodiments.

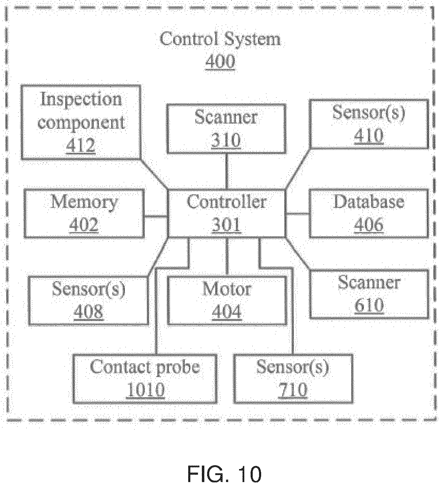

Referring now to FIG. 10, a schematic view of the control system 400 for the inspection system 300 is illustrated, in accordance with various embodiments, with like numerals depicting like elements. In various embodiments, the control system 400 further comprises a contact probe 1010. In various embodiments, the contact probe 1010 may be kept to aside from the inspection system 300 when not in use (e.g., in a tool holder or the like). In various embodiments, in response to the inspection component 412 comprising a holder (e.g., a six-axis holder), the holder may be configured to couple to the contact probe (i.e., in response to receiving instructions from the controller 301. In various embodiments, the contact probe 1010 may configured to electrically couple to the controller 301 in response to the holder being coupled to the contact probe 1010. In various embodiments, the contact probe 1010 may be configured to electronically couple to the controller 301. The present disclosure is not limited in this regard.

In various embodiments, the contact probe 1010 is configured for non-destructive inspection (NDI). In this regard, any NDI probe is within the scope of this disclosure. For example, the contact probe 1010 may comprise an eddy current inspection (ECI) probe, an eddy current array (ECA) probe, a thermoacoustic (TAI) probe, or the like.

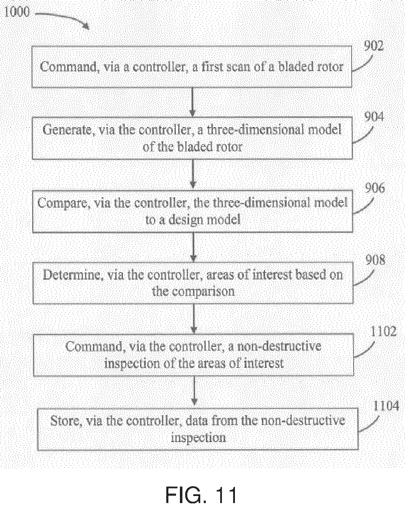

Referring now to FIG. 11, a process 1000 for inspecting bladed rotor that is performed by the control system 400 (from FIG. 10) of the inspection system 300 is illustrated, in accordance with various embodiments. In various embodiments, the process 1000 includes steps 902, 904, 906, and 908 of process 900.

The process 1000 further comprises commanding, via the controller 301, a non-destructive inspection of the areas of interest (step 1102). In this regard, the controller 301 may command the inspection component 412 (e.g., a holder or the like) to couple to a contact probe 1010. In response to coupling the inspection component 412 to the contact probe 1010, the controller 301 may become electronically (e.g., wirelessly or wired) coupled to the controller 301. In this regard, any data detected from the contact probe 1010 may be transmitted to the controller 301 and stored in the database 406 along with the three-dimensional models described previously herein. In this regard, non-destructive inspection may detect defects that may otherwise be undetectable by tracking 3D scanners 310, 610. Thus, by further inspecting the bladed rotor with the contact probe, additional data may be provided to the IBR analysis system in step 204 of method 200 to provide for a more robust repair analysis and determination, in accordance with various embodiments. In various embodiments, the non-destructive inspection performed in step 1102 may be performed for the entire bladed rotor. The present disclosure is not limited in this regard. In various embodiments, although illustrated as replacing steps 910, 912 of process 900, the present disclosure is not limited in this regard. For example, in various embodiments, steps 1102 and 1104 are performed in addition to steps 910 and 912 of process 900.

Referring now to FIG. 12, a perspective view of a system 1200 is illustrated, in accordance with various embodiments. In various embodiments, the system 1200 includes an IBR inspection system 1201 and/or an IBR repair system 1202. In various embodiments, the IBR inspection system 1201 includes the IBR inspection system 300 with additional elements as described further herein. For example, the IBR inspection system 1201 further comprises a holder 1210. In various embodiments, the holder 1210 is utilized as a sole inspection component 412 of the inspection system 1201, in combination with the tracking 3D scanner 310 and/or tracking 3D scanner 610, or the like. In various embodiments, the holder 1210 is utilized as an inspection component 412 in an inspection step 202 of method 200 and utilized as a repair component during the repair step 206 of method 200. In this regard, the holder 1210 may be configured to couple to and uncouple from various tools (e.g., a scanner, such as tracking 3D scanners 310, 610, a probe, etc., a subtractive component, such as a mill, a lathe, a serrated cutter, etc., an additive component, such as a DED head, an auger, etc.). The present disclosure is not limited in this regard.

The IBR 100 is fabricated as a composite material by varying material properties layer by layer throughout the IBR 100 to optimize mechanical properties of the alloy and material to tailor the chemistry and microstructure features to enhance strength, temperature capability, improve damage tolerance and define residual stress characteristics in a localized manner within the IBR 100. The implementation of layer by layer material property selection and formation provides a functionally graded material that allows portions of the IBR 100 to be tailored to accommodate and optimize the material structure to accommodate localized temperatures and stresses. The material properties of each layer may be specified through application of a structural and/or multi-physics optimization methodology.

Each layer of the IBR 100 from a rim to a bore is designed to have a specific local layer orientation in one direction that corresponds to specific desired mechanical properties required of that localized region of the IBR 100. In this example, the layers are orientated transverse to an intended axis of rotation of the IBR 100. Moreover, at least two of the layers of material include different local anisotropy corresponding to a desired mechanical property.

The specific layers are formed by an additive manufacturing process that applies and builds layer upon layer until a completed part such as the exemplary IBR 100 is complete. Each of the layers can be formed with different densities and different material compositions. Moreover, each layer can be formed from powder of differing size and different scanning speed and process parameters that is assigned to that specific layer to provide different densities. The different densities can also be formed by varying power of the directed energy device forming that layer. The properties of each layer may be specified through application of a structural and/or multi-physics optimization methodology.

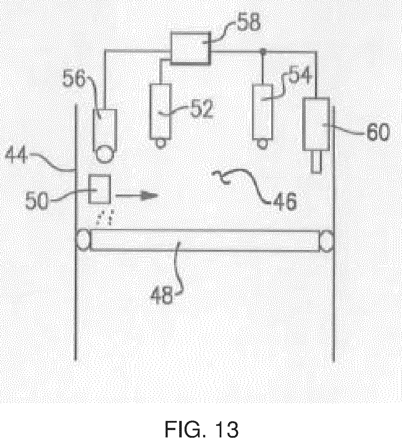

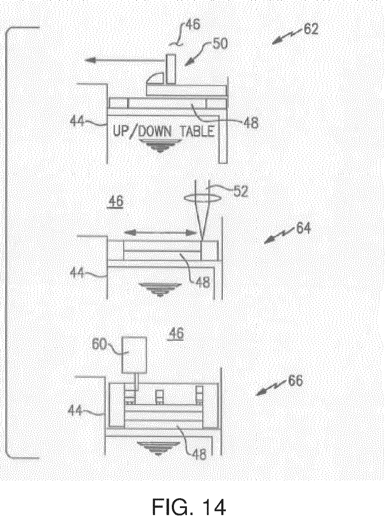

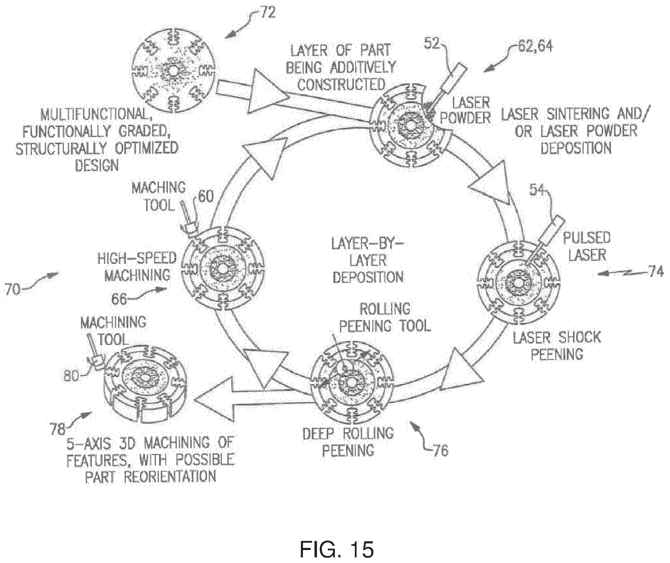

Referring to FIGS. 13-15, an exemplary additive manufacturing machine 44 for creating a functionally graded turbine disk includes a workspace 46 with a base plate 48. A first heat source 52 is provided to direct energy onto powder material laid down on the base plate 48 (See FIGS. 13 and 14). In this example, the direct energy produced by the first heat source 52 may comprise a laser beam or an electron beam. Some additive manufacturing systems may utilize a material depositor 50 that lays a powder metal material onto the base 48. Both powder bed laser or electron beam melting process and/or powder feeder laser or electron beam melting process can be used. In addition, a wire deposition system can also be used. The first heat source 52 may then scan over the base 48 and melt the powder material in a pattern and configuration corresponding with a layer of the desired final component geometry. Once the melted material solidifies and before subsequent layers are applied to the deposited layer, an exemplary pre-heating module may be utilized. The exemplary pre-heating system may thermally treat a surface of a deposited layer in a strain reducing process. In at least one exemplary embodiment, the pre-heating module may elevate the temperature of the aforementioned identified regions of interests for repair and for location and volume of repair material of the IBR 100. In carrying out the exemplary pre-heating step, the temperature of the surface of the deposited layer may be elevated to a temperature range of approximately 450°F (232 °C) to approximately 600°F (316 °C). The pre-heating treatment disclosed herein crystallizes the columnar grains at the aforementioned lower temperature range and, in turn, changes the initially deposited large, elongated, columnar grains having strong orientation texture into smaller, equiaxed grains with a weak texture. After each deposited layer undergoes pre-heating treatment, a deep rolling process may be utilized to treat the surface of each deposited, pre-heat treated layer and enhance each layer's property. The aforementioned pre-heat treatment and deep rolling processes may be repeated for each deposited layer until the completed part is formed. In at least one alternative embodiment, the exemplary machine 44 may include a second energy directing device 54 that provides a surface and heat treatment to the solidified layers. The second laser beam 54 may provide, for instance, a laser shock peening treatment to intermediate layers of the component (See FIG. 15).

Referring again to FIG. 13, the exemplary machine 44 also includes a machine tool 60 that is hybrid additive manufacturing DED process in addition to a subtractive technique that can remove material during manufacture to produce both desired geometry and surface finishes at intermediate stages of the process. In one example, the machine tool 60 is a hybrid DED and milling tool that removes material an intermediate layer to produce a desired surface finish. The surface may include a surface that will be concealed in the completed part. However, as the additive manufacture process builds a part layer by layer, surfaces that will be enclosed in the completed part can be mechanically surface treated, and subsequently machined, treated or otherwise finished and then subsequently closed off by additional layers of material.

Again, after each deposited layer undergoes the aforementioned pre-heating treatment, the machine 44 further includes a tool for cold working a surface to impart a desired microstructure or residual stress state. In this example, a deep rolling tool 56 may provide for the surface finishing and treatment of surfaces during component build up. In addition, by utilizing a customized deep rolling process after the deposition of each layer, a compressive residual stress of a specific residual stress profile that is defined by the designer can be induced to the deposited layer leading to an increase in the disc fatigue resistance. Moreover, the deep rolling tool 56 can also be utilized on the final outer surface of a completed part to impart desired surface material characteristics. Each of the features of the machine 58 may be governed by a controller 58 that coordinates operation of the tools and energy devices to create a part with varied material properties that are tailored layer by layer.

Referring again to FIG. 14 with continued reference to FIG. 13, the exemplary process for fabricating the functionally graded IBR 100 utilizes an additive manufacturing process where metal powder is laid down by the depositor 50 as indicated at 62 within the workspace 46 onto the base 48. The first laser 52 is then utilized to melt portions of the powder laid down on the base 48 in the form of the desired part. The subsequent layers are built upon the initial layer to form the IBR 100 layer by layer until the part configuration and overall desired geometry is obtained.

The table 48 that moves in response to the application of a metal powder to maintain a desired focus by the laser 52 as is schematically shown at 64. In the disclosed process each layer or group of layers are formed depending on the desired material properties for that specific layer. The layers may be varied by utilizing a powder material of a different size and/or by varying amount of energy to melt the powder material.

The milling tool 60 is utilized on the part while it is being fabricated as is schematically indicated at 66. The milling tool 60 can be utilized to finish machine or otherwise modify layers that are applied during the additive manufacturing process during the fabrication process. Moreover, internal features that otherwise would not be accessible after completion of the part can be finished machined utilizing the milling tool 60 that is part of the exemplary additive manufacturing machine 44.

Accordingly, the exemplary process combines additive metal laser sintering/melting processes to grow a component from powder and also provides the ability to finish machine whole parts or sections of a part to a desired surface finish with very high accuracies. Material properties of each layer, including porous structures, can be changed by varying the laser focus, power, or varying the densities of material with this method. The material properties can also be customized by using the deep roller process or laser shock peening process after each layer. The properties of each layer may be specified through application of a structural and/or multi-physics optimization methodology.

Referring again to FIG. 15, with continued reference to FIGS. 13 and 14, the exemplary fabrication method is schematically shown and indicated at 70 and includes the initial step of determining the material properties of the functionally graded turbine disk layer by layer. The design includes parameters for material, density and microstructure for each layer of the completed part that is determined by analysis of stresses and other operational factors encountered during operation and a selection of material properties that best addresses and accommodates those stresses. The design includes a layout, layer by layer, of the component, in this instance, the high-pressure IBR 100 of graded material composition, density and microstructure.

The IBR 100 is then fabricated utilizing the additive manufacturing process of depositing powder followed by melting and solidifying portions of the powder as indicated at 62 and 64.

As discussed above, in an alternative embodiment, the process may include the use of the second laser beam 54 to thermal or mechanical treat a surface of a layer in a strain reducing process or a laser shock peening process on a previously solidified layer of powder material as is indicated at 74. The laser shock peening process may generate a predicted amount of residual stress within a layer according to the design 72. The laser shock peening process may be utilized on each solidified layer or may be utilized on select solidified layers to provide the desired material properties and stress characteristics for each layer within the disk.

The heat-treated solidified layer of powder material may also be cold worked to further refine the surface layer microstructure and enable higher operating temperatures and loads as is indicated at 76. In this example, a deep rolling process is utilized during the additive manufacturing process between the application and solidification of subsequent layers. As shown, each layer can be both laser shock peened and deep rolled to provide the desired material properties and characteristics. Moreover, such laser shock peening and deep rolling can be utilized in any combination on various layers within the disk during fabrication to further provide for the functional grading and variation in material properties and characteristics within the IBR 100.

One of the last steps in fabrication of the disk is the machining of the outer surface to include machining of the slots to hold turbine blades as is commonly understood and schematically shown at 66. In this example, the machine for fabricating the IBR 100 includes the machining tool 60 that can be utilized to fabricate the slots in-situ thereby increasing the accuracy of producing the IBR 100 and improving process efficiency. The external surface will be finished using a 5-axis milling machine as indicated at 78 to obtain a required final surface finish. The final finishing may be conducted on the same machine using the milling tool or may be moved to a secondary machine and finished with 5-axis machining center using a cutting tool indicated at 80 for completing external features.

By fully utilizing the upstream process information, the repair process efficiency of the exemplary system is improved. For example, the efficiency can be reflected by a reduction of cost (40%), repair time (25%) and part transfer between multiple machines and fixtures during repair process. The exemplary fully automated hybrid system achieves these results by integrating data within a representative process chain for automatic repair process. With the in-process and scanned part model, the system is efficient to identify the location and volume of material for repair process. Also, the models can be used to automate the toolpath generation for both the material deposition, deep rolling and final finishing operations. Utilizing the exemplary hybrid process, equiaxed grains are obtained using the deep rolling process with the exemplary pre-heating system. For instance, the exemplary process can reduce the microstructure grain size of the deposited coating layer from a 12.5 mm columnar grain size to an equiaxed grain size of 200 µm.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A hybrid method for inspecting and repairing a gas turbine engine component (100), comprising:
coupling at least one gas turbine engine component (100) to an inspection system (300; 1201) housed within an enclosure area (450);
scanning, via the inspection system (300; 1201), the gas turbine engine component (100) with a first scanner (310);
probing, via the inspection system (300; 1201), the gas turbine engine component (100) with a contact probe (1010);
scanning, via the inspection system (300; 1201), areas of interest of the gas turbine engine component (100) with a second scanner (610);
depositing layers of powder onto the areas of interest of the gas turbine engine component (100);
solidifying and fusing each layer with a first directed energy beam to define the gas turbine engine component (100);
pre-heat treating the solidified layer prior to depositing a subsequent layer of powder; and
cold working a surface of a solidified layer prior to depositing a subsequent layer of powder.

2. The hybrid method of claim 1, wherein depositing layers of powder comprises depositing layers of powder along a plane transverse to an intended axis of rotation (A) of the gas turbine engine (20).

3. The hybrid method of claim 1 or 2, wherein pre-heat treating the solidified layer induces a compressive residual stress into solidified layer of powder.

4. The hybrid method of any preceding claim, wherein cold working comprises deep rolling the solidified layer of powder to obtain a desired microstructure and enhance the surface properties by inducing compressive residual stress.

5. The hybrid method of any preceding claim, wherein pre-heat treating the solidified layer of powder locally generates a desired micro structure of the solidified layer of powder; and/or pre-heat treating the solidified layer of powder induces compressive a residual stress.

6. The hybrid method of any preceding claim, wherein cold working comprises deep rolling a surface of the solidified layer of powder prior to depositing a subsequent layer of powder material; or further comprising deep rolling the solidified layer to obtain a desired strength of material and surface microstructure.

7. The hybrid method of any preceding claim, further comprising maintaining within the enclosure area (450) an amount of oxygen at approximately 3 parts per million to approximately 180 parts per million prior to depositing the layers of powder.

8. The hybrid method of any preceding claim, wherein pre-heat treatment comprises elevating within the enclosure area (450) a temperature of approximately 450°F (232 °C) to approximately 600°F (316 °C).

9. The hybrid method of any preceding claim, wherein the hybrid method further comprises generating an automatic toolpath comprising:
generating a first region of interest for repair and a second region for location and volume of material for repair of the gas turbine engine component (100) using a second scan generated by the second scanner (610);
extracting a cutting extraction data previously generated from a first scan of the gas turbine engine component (100) prior to use; and
comparing the cutting extraction data with the first region of interest for repair and the second region for location and volume of material for repair to generate the automatic toolpath.

10. A hybrid inspection and repair system (250; 1200) for a gas turbine engine component (100), comprising:
an enclosure area (450) housing a workspace (46);
the enclosure area (450) comprising:
a transparent enclosure material (456);
at least one gas inlet (458);
a gas outlet (460);
a sensor (408; 410; 710) for monitoring an oxygen concentration (462) within the enclosure area (450);
an oxygen concentration display (464);
at least one tube (466) disposed in connection with and between at least one gas inlet (458) and a gas source, and disposed in connection with the gas outlet (460); and
the workspace (46) comprising:
at least one support plate (452);
a motor (404) operably coupled to a shaft (308), the shaft (308) rotatably coupled to the at least one support plate (452), the shaft (308) configured to be coupled to the gas turbine engine component (100);
a contact probe (1010);
at least one machine spindle (468) comprising a holder (1210), the machine spindle (468) disposed in electric communication with the motor (404), the holder (1210) secures at least the contact probe (1010);
a first scanner (310) configured to couple to the at least one machine spindle (468);
a sensor (408; 410; 710) for determining an amount of oxygen within the enclosure area (450);
a material depositor (50) for depositing powder within the workspace (46);
a first energy source (52) for solidifying a deposited layer of powder within the workspace (46); and
a second energy source (54) for pre-heat treating a solidified layer of powder in-situ; and
a controller (301) in electronic communication with the first sensor (408; 410; 710), the first scanner (310), and the motor (404), the controller (301) configured to:
command the first scanner (310) to scan the gas turbine engine component (100);
command the holder (1210) to swap the first scanner (310) with the contact probe (1010);
command the contact probe (1010) to probe the gas turbine engine component (100).

11. The hybrid inspection system of claim 10, wherein the controller (301) is further configured to:
generate a digital map based on data from the first scanner (310); and
store the digital map and probe data from the contact probe (1010) together in a database (226; 406).

12. The hybrid inspection system of claim 10 or 11, wherein the controller (301) is further configured to determine areas of interest from data received from one of the first scanner (310) and the contact probe (1010), optionally wherein the first scanner (310) is a coordinate measuring machine (CMM) (310) and the second scanner (610) is a three-dimensional scanner (610).

13. The hybrid inspection system of any of claims 10 to 12, wherein the controller (301) is further configured to:
command the second scanner (610) to generate a second scan comprising a first region of interest for repair and a second region for location and volume of material for repair of the gas turbine engine component (100);
command a database (226; 406) or memory (214; 234) to extract a cutting extraction data previously generated from a first scan of the gas turbine engine component (100) prior to use; and
command the database (226; 406) or memory (214; 234) to compare the cutting extraction data with the second scan to generate an automatic toolpath.

14. The hybrid inspection system of any of claims 10 to 13, wherein:
the contact probe (1010) is configured to be in electronic communication with the controller (301) in response to being coupled to the holder (1210); and/or
the controller (301) is configured to command the contact probe (1010) to probe the gas turbine engine component (100) in areas of interest determined based on the first scanner scanning the gas turbine engine component (100).

15. The hybrid inspection system of any of claims 10 to 14, wherein:
the second energy source (54) achieves a pre-heat treatment temperature range of approximately 450°F (232 °C) to approximately 600°F (316 °C); and/or
the sensor (408; 410; 710) maintains within the enclosure area (450) an amount of oxygen of approximately 3 parts per million to approximately 180 parts per million.
